# EUROPEAN PATENT APPLICATION

(11) **EP 0 836 962 A1**
(43) Date of publication of application: **22.04.1998**
(21) Application number: 97308270.4
(22) Date of filing: 17.10.1997
(51) Int. Cl.: B60J 10/00

(54) **Trimming, Sealing or finishing strips**

(30) Priority: 17.10.1996 GB 9621698
(71) Applicant: DRAFTEX INDUSTRIES LIMITED, Edinburgh EH2 3AP, Scotland (GB)
(72) Inventor: Gallas, Gérard, 44300 Nantes (FR)
(74) Representative: Foster, David Martyn

(57) **Abstract**

A sealing strip (1) for a motor vehicle door comprising a sealing section (12) and a gripping section (10) in which the sealing section (12) is formed from two concentrically positioned portions (24, 26). The inner portion (24) is formed from a low density cellular material in which the majority of the cells are open. The outer portion (26) is formed from a higher density cellular material in which the majority of the cells are closed. The sealing section (12) is therefore flexible and resilient whilst having a pleasing outward appearance.

## Description

The invention relates to a trimming, sealing or finishing strip, formed by securing first and second components of resilient cellular material together, in which at least part of the first component is covered by the second component.

One form of such a strip is shown in GB-B-1 232 358. However, in this strip, the characteristics of the strip are defined substantially wholly by the first component material. The invention aims to overcome this problem.

Accordingly, the known strip is characterised in that the first component is substantially of open-cell structure and the second component is substantially of closed-cell structure.

The invention further relates to a method of forming a trimming, sealing or finishing strip, comprising the steps of forming a first component of resilient cellular material having a required shape and covering at least part of the required shape of the first component with a second component of resilient cellular material having a required shape.

One form of such a method is shown in GB-B-1 232 358. However, in this method, the surface of the first material is treated to form a coating thereby forming a second material. One embodiment of the invention aims to provide a strip capable of producing strips comprising two different materials.

Accordingly, the known method is characterised in that the first component is of substantially open-cell structure and the second component is of substantially closed-cell structure.

Trimming, sealing or finishing strips embodying the invention and for use in vehicles will now be described, by way of example only, with reference to the accompanying diagrammatic drawings in which:-
Figure 1 is a cross-sectional view of one of the trimming, sealing or finishing strips for sealing around a door opening in a motor vehicle body;
Figure 2 is a cross-sectional view of an alternative configuration for the sealing portion of the strip in Figure 1;
Figure 3 is a cross-sectional view of a further configuration for the sealing portion of the strip in Figure 1; and
Figure 4 is a cross-sectional view of one of the trimming, sealing or finishing strips suitable for sealing around the window of a building 1.

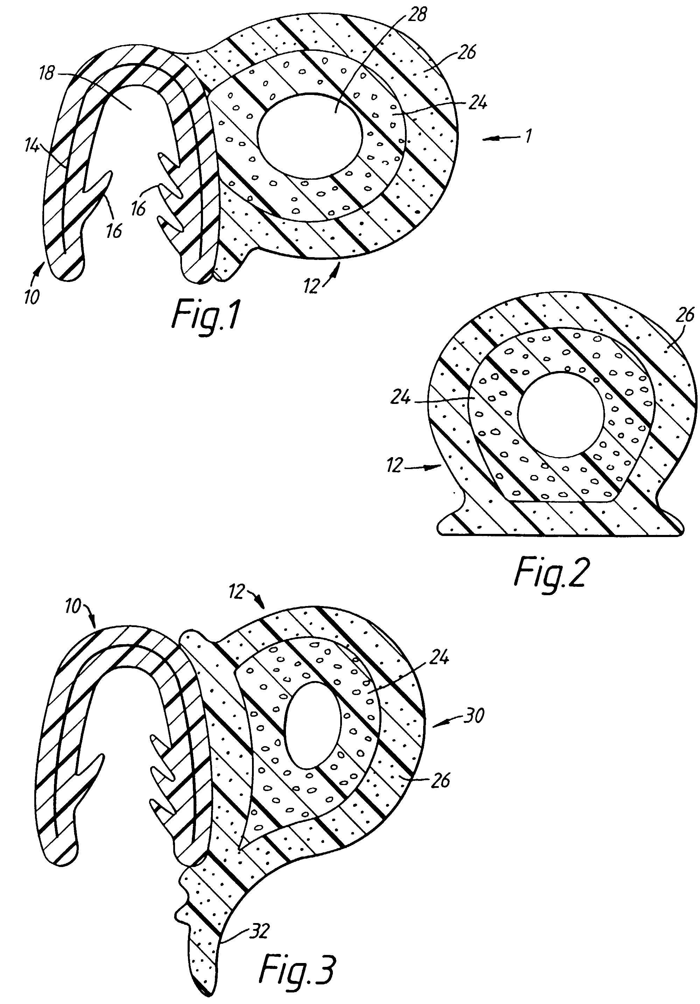

In the embodiment of the invention shown in Figure 1, the longitudinally extending trimming, sealing or finishing strip 1 comprises a gripping portion 10 and a sealing portion 12.

In this example, the gripping portion 10 is made of channel-shaped resilient material such as plastics or rubber material in which is embedded a longitudinally extending U-shaped reinforcing metal carrier 14. The gripping portion 10 is also provided with deformable gripping lips 16 which run along the inside walls of the channel 18. It will be appreciated that other designs of gripping portion 10 are possible. The metal carrier 14 may take any suitable form, such as incorporating U-shaped metal elements arranged side-by-side to define a channel and either interconnected or completely disconnected. The number of gripping lips may also be varied. In this example, there are three gripping lips 16 on one inside wall of the channel 18 and one gripping lip 16 on the other inside wall but there need not be this arrangement of gripping lips 16 and any suitable number of gripping lips 16 may be used on either inside channel wall. Indeed, one or more of the gripping lips 16 may be replaced by serrations on either inside channel wall.

The sealing portion 12 in this example comprises a flexible, resilient, generally cylindrical tube 22 which comprises a generally cylindrical inner portion 24 and a generally cylindrical outer portion 26, the outer portion 26 being concentric with the inner portion 24.

The sealing portion 12 is formed with a hollow bore 28 which extends along the complete length of the strip 1.

The inner portion 24 of the sealing portion 12 is formed from a low density, cellular thermoplastic material. The cellular material is generally in a spongy form in which the majority of the cells are open. Such materials include polypropylene/EPDM, SEBS or PVC/nitrile thermoplastic compounds although it will be appreciated that any other suitable material may be used.

The outer portion 26 is formed from a cellular thermoplastic material with a higher density than the material forming the inner portion 24. The higher density material generally comprises material with a cellular structure in which the majority of the cells are closed.

A thermoplastic elastomer (TPE) material may be used.

In order to obtain good bonding between the materials of the inner portion 24 and the outer portion 26, the outer portion 26 is generally formed from a material compatible with the material forming the inner portion 24.

The outer portion 26 is generally formed from a thinner section of material than the inner portion 24.

The low density material forming the inner portion 24 thus provides the required elastic response necessary for good sealing combined with good compression and creep strength which ensures good sealing over time.

The higher density material forming the outer portion 26 provides moisture resistance and a smoother external appearance necessary to give a pleasing finish to the seal. Furthermore, as the thickness of the outer portion 26 need not be large, there is no creation of unattractive folds in the seal material which can damage the effectiveness of the seal. Additionally, the outer material can be coloured as required.

The sealing section described is thus advantageous compared with sealing sections formed from material presenting an open-cell structure on its external surface. In such a case the appearance of the seal would be unattractive. Additionally, moisture would be retained in the open cells which in colder weather would freeze causing cracking and deterioration of the seal material leading to leakage. To avoid or reduce such problems, such seals could be provided with a protective skin either by vulcanisation for rubber seals or by co-extrusion in the case of thermoplastic seals. However, in the case of rubber, the process used is expensive and does not ensure a perfectly hermetic outer skin. Additionally, it is not possible to colour the skin without further increasing the cost. In the case of a seal formed with a thermoplastic skin, sealing is ensured. However, a strip formed in this manner can only be fitted in straight lengths as bending will cause folds to appear on the skin. These folds are unattractive and can cause leaks. This is, therefore, unsuitable for the complex configurations required for vehicle door seals.

The sealing portion 12 of the strip in Figure 1 accordingly provides a seal with a pleasing outward appearance whilst retaining good creep strength and compression and good long term sealing characteristics. Furthermore, as the thickness of the outer portion 26 is generally between 0.5 and 1 mm for a door seal and as a result of the cellular structure of the material, the sealing portion can be formed in the necessary complex configuration and will accommodate bends of a small radius, without buckling, creasing or folding. To further reduce the possibility of creases or folds in the sealing section being formed, it may be advantageous for the neutral phase of bending to be located at the top of the gripping portion as shown in Figure 1.

The sealing portion 12 of the strip of Figure 1 is generally formed in two stages. Firstly, the inner portion 24 is produced by extrusion and the element produced expands in the open air to form the open-cell structure. A chemical blowing agent may be used, or alternatively, water may be used under pressure during extrusion of the sealing portion 12 in order to obtain the desired low density. Subsequently, the element is introduced into the crosshead of an extruder in order to coat the element with the material of the outer portion 26. At the outlet of the crosshead, cold air or nitrogen is blown on the element to obtain a seal portion 12 with a smooth outer appearance. It will be appreciated that any other suitable fluid may be used in place of air or nitrogen.

It is possible to obtain the desired characteristics of the sealing portion 12 by controlling the relative thicknesses of the inner and outer portions 24,26 and by controlling their respective densities. Accordingly, the stiffness, flexibility, resistance to ageing and compression set can all be controlled during the manufacturing process by varying the ratio of the blowing agents, the viscosity of the material during the fusion, and the geometry of the extrusion dies.

The sealing portion 12 is then attached to the gripping portion 10. In this example, the gripping portion 10 is adhesively attached to the sealing portion 12. However, it will be appreciated that any suitable means of attachment may be used. Furthermore, the sealing portion 12 may be integrally formed with the gripping portion 10 by over-moulding or co-extrusion of the gripping portion 10 and the sealing portion 12.

A second embodiment of the invention is shown in Figure 2 in which parts corresponding to parts in other Figures are similarly referenced.

Figure 2 shows a sealing section 12 prior to connection to a suitable supporting surface. The sealingsection 12 is formed in a closed cylindrical configuration in which the outer portion 26 forms a complete coating over the inner portion 24.

Figure 3 shows a third embodiment of the invention in which parts corresponding to parts in other Figures are similarly referenced.

The strip 30 of Figure 3 is formed by inserting the gripping portion 10 into the crosshead of an extrusion machine and then extruding the inner portion 24 of the sealing section 12. The elements formed are passed through a second crosshead to coat the inner portion 24 with the outer portion 26.

In this manner, the outer portion 26 completely covers the inner portion 24. Additionally, it is the outer portion 26 which is joined to the gripping portion 10. The outer portion 26 is additionally provided with a downwardly extending lip 32 providing additional sealing and exterior finishing.

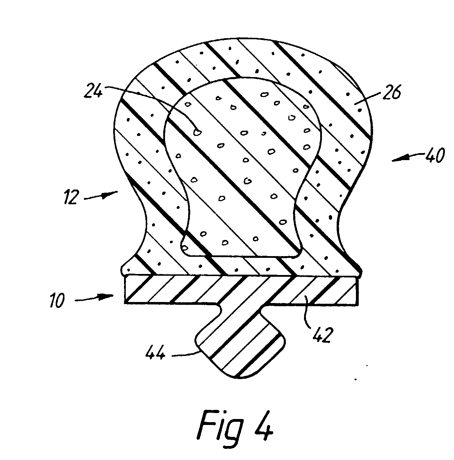

Figure 4 shows a further embodiment of the invention providing a longitudinally extending sealing strip 40 suitable for forming a seal around a window in a building.

In this example, the gripping portion 10 is formed by a generally longitudinally extending flat plate 42 attached on its topside to a sealing section 12 to be described. The bottom side of the flat plate 42 is provided with a downwardly extending protrusion 44 for locating and fixing the seal in a suitably shaped recess in a window (not shown).

The sealing portion 12 comprises an inner portion 24 and an outer portion 26. The inner portion 24 is formed from the low density cellular thermoplastic material with a generally open cell structure and the outer portion 26 is formed from the higher density cellular thermoplastic material with a generally closed cell structure.

It will be appreciated that there are many different sealing portion configurations that may be used and that the sealing portion need not be a longitudinally extending cylindrical type.

Furthermore, there are many different configurations of gripping portion 10 which may be used in association with the sealing portions 12 described above.

The materials used for the inner and outer portions 24,26 need not be the same thickness but can be any thickness required to give the desired properties.

It will be further appreciated that as both the materials used in the sealing portion are formed from a foam material, the weight of the final component is reduced when compared to the weight of a similar component formed from thermoplastics.

Furthermore, the sealing portion 12 can be formed separately from the gripping portion 10 and adhesively attached thereto. However, the sealing portion 12 can be co-extruded with the gripping portion 10 or over-moulded.

## Claims

1. A trimming, sealing or finishing strip, formed by securing first and second components (24, 26) of resilient cellular material together, in which at least part of the first component (24) is covered by the second component (26), characterised in that the first component (24) is substantially of open-cell structure and the second component is substantially of closed-cell structure.

2. A strip according to claim 1, characterised in that the second component (26) has a sealed outer surface.

3. A strip according to claim 1 or 2, characterised in that the second component (26) comprises a thin coating formed on at least part of the first component.

4. A strip according to any preceding claim, characterised in that the first and second components (24, 26) are formed from thermoplastics materials.

5. A strip according to claim 4, characterised in that the first component (24) is formed from a low density thermoplastics material.

6. A strip according to claim 4 or 5, characterised in that the first component (24) is formed from polypropylene/EPDM or SEBS or a PVC/nitrile compound.

7. A strip according to any one of claims 1 to 4, characterised in that the second component (26) is formed from a high density thermoplastics material.

8. A strip according to claim 7, characterised in that the second component (26) is a polypropylene/EPDM or SEBS or a PVC/nitrile compound.

9. A strip according to claim 7 or 8, characterised in that the second component (26) is coloured.

10. A method of forming a trimming, sealing or finishing strip, comprising the steps of forming a first component of resilient cellular material (24) having a required shape and covering at least part of the required shape of the first component (24) with a second component of resilient cellular material (26) having a required shape, characterised in that the first component (24) is of substantially open-cell structure and the second component (26) is of substantially closed-cell structure.

11. A method according to claim 10, characterised by the step of sealing the outer surface of the second material (26).

12. A method according to claim 10 or 11, characterised by the step of blowing the second material (26) to obtain a smooth outward appearance.

13. A method according to any one of claims 10 to 12, characterised by the step of expanding the first material (24) in air to produce the open-cell structure.

14. A method according to claim 13, characterised by the expanding step further comprising use of a blowing agent.

15. A method according to claim 14, characterised in that the blowing agent is water under pressure.

16. A method according to any one of claims 10 to 14, characterised in that the first and second materials (24, 26) are thermoplastic.

17. A method according to claim 15, characterised in that the first material (24) is a low density thermoplastic.

18. A method according to claim 17, characterised in that the first material (24) is polypropylene/EPDM or SEBS or a PVC/nitrile compound.

19. A method according to claim 16, characterised in that the second material (26) is a high density thermoplastic.
